# EUROPÄISCHE PATENTSCHRIFT

(11) **EP 1 147 326 B1**
(45) Veröffentlichungstag und Bekanntmachung des Hinweises auf die Patenterteilung: **25.06.2003**
(21) Anmeldenummer: 00904972.7
(22) Anmeldetag: 28.01.2000
(51) Int. Cl.: F16D 65/092, F16D 65/12, F16D 55/00, F16D 51/00, F16D 13/00

(54) **VERFAHREN UND VORRICHTUNG ZUM VERMINDERN BZW. VERMEIDEN DER GERÄUSCHENTWICKLUNG VON REIBUNGSBREMSEN UND -KUPPLUNGEN**
METHOD AND DEVICE FOR REDUCING OR PREVENTING NOISE DEVELOPMENT OF FRICTION BRAKES AND FRICTION CLUTCHES
PROCEDE ET DISPOSITIF SERVANT A REDUIRE OU A EVITER LA FORMATION DE BRUITS SUR DES FREINS ET DES EMBRAYAGES A FRICTION

(30) Priorität: 30.01.1999 DE 19903757
(43) Veröffentlichungstag der Anmeldung: 24.10.2001
(73) Patentinhaber: TMD Friction Europe GmbH, 51381 Leverkusen (DE)
(72) Erfinder: MELCHER, Klaus, D-45133 Essen (DE); BORCHERT, Thomas, Adelbert, D-59368 Werne (DE); KASPAR, Pierre, D-45133 Essen (DE); STEPPRATH, Peter, D-46282 Dorsten (DE)
(74) Vertreter: Hosbach, Hans Ulrich, Dipl.-Ing.
(86) Internationale Anmeldenummer: EP0000660
(87) Internationale Veröffentlichungsnummer: WO00045063

(56) Entgegenhaltungen:
- EP-A- 0 727 591
- WO-A-97/31195
- DE-A- 3 811 222
- US-A- 4 557 360
- PATENT ABSTRACTS OF JAPAN vol. 009, no. 322 (M-440), 18. Dezember 1985 (1985-12-18) -& JP 60 157526 A (YAMAHA HATSUDOKI KK), 17. August 1985 (1985-08-17)
- PATENT ABSTRACTS OF JAPAN vol. 1997, no. 05, 30. Mai 1997 (1997-05-30) -& JP 09 014303 A (NISSAN MOTOR CO LTD), 14. Januar 1997 (1997-01-14)

## Beschreibung

Die Erfindung betrifft eine Reibungsbremse oder -kupplung mit einer Mehrzahl von Bauteilen, deren Flächen derart dimensioniert sind, daß die bei einem Reibvorgang erzeugten Schallwellen hörbar sind, wobei mindestens eines der Bauteile mit mindestens einem Schwingungselement verbunden ist.

Bekanntlich neigen Reibungsbremsen dazu, bei ihrer Betätigung in unregelmäßiger Weise Geräusche zu erzeugen, die vom Menschen als unangenehm empfunden werden. Die Entstehung derartiger Geräusche ist darauf zurückzuführen, daß sich der Reibbelag im Bereich seiner Elastizität verformt, wobei sich der Verformungsgrad ständig ändert und auf diese Weise Schwingungen erzeugt werden . Sofern die Frequenz dieser Schwingungen in die Bereiche der Eigenfrequenzen großflächiger Bremsenbauteile gelangt, werden letztere zu Schwingungen mit großflächig auftretenden, großen Wegamplituden angeregt, wie sie bei Resonanzschwingungen im Falle relativ kleiner Dämpfung auftreten. Die daraus resultierenden Druckwellen in der Umgebungsatmosphäre dringen als Störgeräusche in das menschliche Gehör ein.

Als Gegenmaßnahme wurde bereits versucht, die in der Bremsanlage auftretenden Eigenfrequenzen zu verschieben. Dieses Konzept ist jedoch aufgrund der Lagenvielzahl konstruktiv nur schwer und auch dann nur unvollkommen umzusetzen.

Ferner hat man versucht, die Dämpfung durch Kopplungsmodifikationen oder durch Materialvarianten zu erhöhen. Dies ist jedoch ebenfalls nur schwer und auch dann nur unvollkommen realisierbar, und zwar aufgrund enger sicherheitstechnischer und konstruktiv-technologischer Restriktionen.

So beschreibt die WO 97/31195 eine Dämpfung der Reibungsschwingungen zwischen einem Bremsengehäuse und dem zugehörigen Bremsbelag. Dabei kann das Bremsengehäuse schwingfähige Zapfen zum seitlichen Abstützen des Bremsbelages aufweisen. Alternativ kann die Trägerplatte des Bremsbelages mit seitlichen schwingfähigen Zungen versehen sein.

Ferner ist aus der DE 38 11 222 A1 eine Vorrichtung der eingangs genannten Art bekannt, bei der eine Bremsscheibe mit Schwingungstilgern versehen ist. Bei diesen handelt es sich um einseitig eingespannte Platten, die lediglich einen einzigen Freiheitsgrad aufweisen. Zur Erfüllung ihrer Funktion müssen sie zu phasenverschobenem Schwingen angeregt werden. Daraus folgt die Notwendigkeit, ihre Eigenfrequenz auf die Eigenfrequenz der Bremsscheibe einzustellen und die Dämpfung so zu bestimmen, daß sich die erforderliche Phasenverschiebung ergibt. Die zusätzliche Berücksichtigung der Dämpfung bedingt einen ganz erheblichen rechnerischen Mehraufwand bei der Anpassung der Schwingungelemente an die gewünschte Zielfrequenz.

Ausgehend von diesem Stande der Technik, dessen Verhältnisse mit denen von Reibungskupplungen vergleichbar sind, liegt der Erfindung die Aufgabe zugrunde, eine rechnerisch einfachere und konstruktiv flexible Möglichkeit zur Verhinderung bzw. Vermeidung der Geräuschentwicklung von Reibungsbremsen und -kupplungen zu schaffen.

Diese Aufgabe wird mit der eingangs genannten Reibungsbremse bzw. -kupplung erfindungsgemäß dadurch gelöst, daß das schwingungselement als Resonator ausgebildet ist, dessen erste Eigenfrequenz auf eine reibungsinduzierte Anregungsfrequenz der Bremse bzw. Kupplung eingestellt ist und dessen Fläche derart dimensioniert ist, daß die erzeugten Geräusche nicht hörbar sind.

Wesentliche Weiterbildungen der Erfindung sind in den Unteransprüchen gekennzeichnet.

Der Resonator ist ein mit einem der Bremsen- bzw. Kupplungsbauteile fest verbundenes Schwingungselement, dessen Eigenfrequenz auf diejenige reibungsinduzierte Anregungsfrequenz eingestellt ist, die eine Hauptwandungsfläche der Bremse bzw. Kupplung in Resonanzschwingungen versetzen würde. Der Resonator schwingt im Takt dieser Frequenz und setzt die durch den Reibungsprozeß in die Bremse bzw. Kupplung eingeleitete Schwingungsenergie dissipativ um, ohne daß die Hauptwandungsflächen der Anlage in akustisch störende Schwingungen versetzt werden. Die Fläche des Resonators ist nicht hinreichend groß, um Störgeräusche atmosphärisch zu übertragen. Die Anlage ist also akustisch beruhigt, und zwar derart, daß Geräusche in der Umgebung der Eigenfrequenz des Resonators überhaupt nicht erzeugt werden.

Die Eigenfrequenz, auf die der Resonator eingestellt werden soll, wird analytisch, numerisch oder experimentell bestimmt. Daneben besteht die Möglichkeit, die Bremse bzw. Kupplung mit einer Mehrzahl von Resonatoren zu bestücken, die auf unterschiedliche Anregungsfrequenzen eingestellt sind. Auf diese Weise läßt sich der gesamte kritische Bereich abdecken, ohne daß aufwendige Untersuchungen erforderlich wären.

In der Regel wird man ein oder mehrere großflächige Bauteile der Anlage, die reibungsinduzierte Geräusche erzeugen können, mit einem oder mehreren Resonatoren bestücken. Auf diese Weise kann die gesamte Anlage akustisch beruhigt werden.

Von wesentlichem Vorteil ist, daß die Resonatoren keinen definierten Umgebungsluftraum benötigen. Sie müssen lediglich frei schwingen können.

Beste Ergebnisse wurden mit Resonatoren erzielt, die als einseitig eingespannte Balken ausgebildet sind. Sie können in Öffnungen angeordnet sein, die die Wandstärke des zugehörigen Bauteils vollständig durchdringen. Sie können allerdings auch in nischenartigen Ausnehmungen sitzen, sofern ihre Schwingungsfreiheit gewährleistet ist.

Die Materialwahl ist beliebig. Vorteilhaft ist es, die Resonatoren aus dem Material des zugehörigen Bauteils auszubilden und dabei aus dem Material des Bauteils herauszuarbeiten, beispielsweise durch Drahterosion oder Stanzschnitte. Sonstige starre Verbindungen kommen gleichermaßen in Frage.

Eine besonders einfache Anordnung besteht darin, zwei Resonatoren diagonal zueinander versetzt anzuordnen, und zwar in rechteckigen oder annähernd rechteckigen Hauptflächen der Bauteile. Bei runden Hauptflächen eignet sich eine sternförmige Ausrichtung mit entsprechendem Winkelversatz, vorzugsweise von 90°. Ungleichmäßiger Winkelversatz ist ebenfalls möglich.

Die Erfindung ist anwendbar auf Scheibenbremsanlagen, die mindestens eine Bremsscheibe, mindestens zwei Bremsbeläge, mindestens einen Bremssattel, mindestens eine Zuspanneinheit und mindestens eine Halterung aufweisen. Man wird hier die Belagträgerplatten mit einem oder mehreren Resonatoren ausrüsten, und zwar in mittiger oder nach oben, nach unten oder seitlich versetzter Anordnung bezüglich des Bremskolben-Innenkreismittelpunkts. Ferner wird man auch die Bremsscheibe mit sternförmig angeordneten Resonatoren ausrüsten, wobei diese als radial innen eingespannte Balken ausgebildet sind. Im Falle einer innenbelüfteten Bremsscheibe treten die Resonatoren beispielsweise an die Positionen einiger Innenbelüftungsstege. Schließlich kommt auch der Bremssattel für eine Ausrüstung mit Resonatoren in Frage. Scheibenkupplungen können in entsprechender Weise ausgebildet werden.

Anwendbar ist die Erfindung ferner auf Trommelbremsanlagen mit mindestens einer Bremstrommel, mindestens einem Bremsbelag, mindestens einer Bremsbacke, mindestens einer Ankerplatte, mindestens einer Zuspanneinheit und mindestens einer Halterung. Hier wird man vorzugsweise die Ankerplatte, die Bremstrommel (in innen- oder außenseitigen Ausnehmungen) und die Bremsbacke mit Resonatoren bestücken.

Im übrigen eignen sich sämtliche Reibungsbremsen und -kupplungen für eine Anwendung der Erfindung.

Die Einsatzmöglichkeiten der Brems- bzw. -kupplungsanlagen mit Resonatoren sind vielfältiger Art, und zwar sowohl in Fahrzeugen als auch in stationären Maschinen. Zu nennen sind Personenkraftwagen, Lastkraftwagen, Anhänger, Sattelauflieger, Sonderfahrzeuge aller Art, einschließlich landfahrender landwirtschaftlicher und militärischer Fahrzeuge, Rettungs- und Sicherheitsfahrzeuge, extraterrestische Fahrzeuge, Schienenfahrzeuge aller Art, Fluggeräte im Fahrbetrieb und Zweiradfahrzeuge, ferner Fahrstühle, Lauf- und Förderbänder, Rolltreppen, landwirtschaftliches und militärisches Gerät sowie Vergnügungskarussels nebst verwandter Anlage (fliegende Bauten).

Als Beispiel sei ein Scheibenbremssystem vorgestellt, das mit einer reibungsinduzierten Frequenz von 2.000 Hz angeregt wird. Aufgrund der Resonatorbestückung ist das System im Frequenzbereich von ca. 1.750 Hz bis 2.650 Hz frei von eigenfrequenten Wandungsschwingungen und damit frei von Geräuschabstrahlungen.

Die Erfindung wird im folgenden anhand bevorzugter Ausführungsbeispiele im Zusammenhang mit der beiliegenden Zeichnung näher erläutert. Die Zeichnung zeigt in:
Figur 1 einen Bremsbelag für eine Scheibenbremse in perspektivischer Darstellung;
Figur 2 eine Bremsscheibe in perspektivischer Darstellung;
Figur 3 einen Schnitt entlang der Linie A-A in Figur 2;
Figur 4 eine Seitenansicht eines Bremssattels.

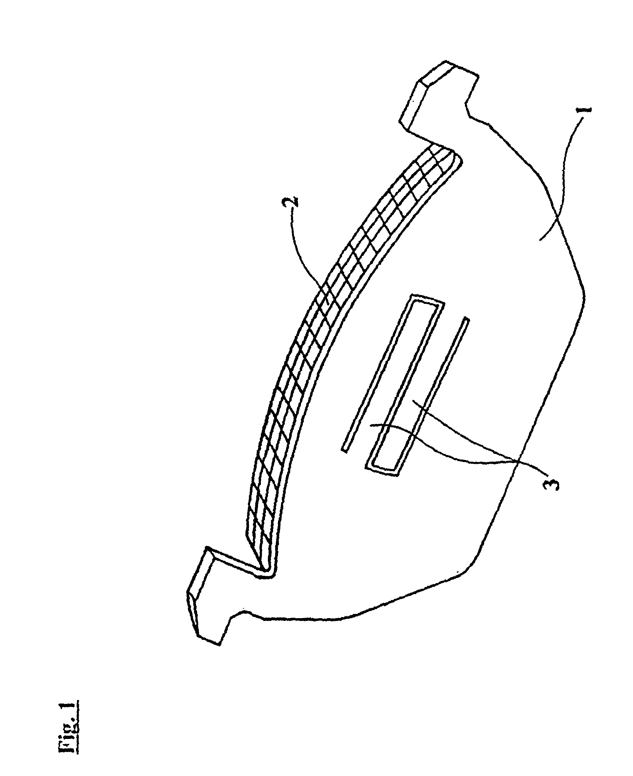

Nach Figur 1 ist eine Trägerplatte 1 für einen Reibbelag 2 vorgesehen. Die Trägerplatte 1 weist zwei Resonatoren 3 auf. Diese sind als einseitig eingespannte Balken ausgebildet und aus dem Material der Trägerplatte 1 herausgearbeitet. Ihre Dicke entspricht der der Trägerplatte 1. Dabei ist die Anordnung so getroffen, daß die Resonatoren 3 diagonal gegeneinander versetzt sind.

Die erste Eigenfrequenz der Resonatoren 3 ist auf die reibungsinduzierte Anregungsfrequenz der Trägerplatte 1 eingestellt, wobei die Flächen der Resonatoren so dimensioniert sind, daß die erzeugten Schallwellen nicht hörbar sind. Die Resonatoren 3 setzen die in die Trägerplatte 1 eingetragene Schwingungsenergie um. Als Ergebnis ist der Bremsbelag akustisch beruhigt. Es werden keine Störgeräusche in die Umgebung abgegeben,

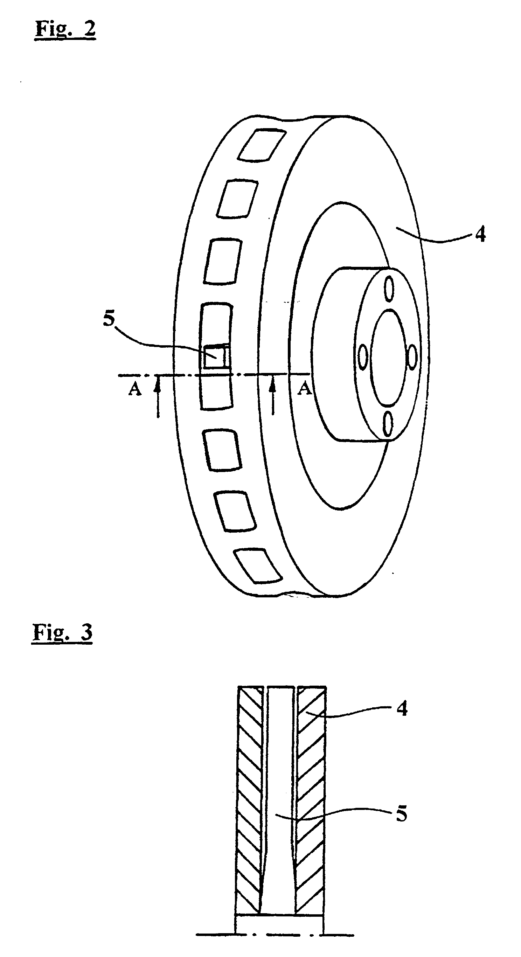

Die Figuren 2 und 3 zeigen eine innenbelüftete Bremsscheibe 4, die einen Resonator 5 enthält. dieser ersetzt einen der nicht dargestellten Innenbelüftungsstege. Auch der Resonator 5 ist als einseitig eingespannter Balken ausgebildet, wobei die Einspannstelle radial innen liegt.

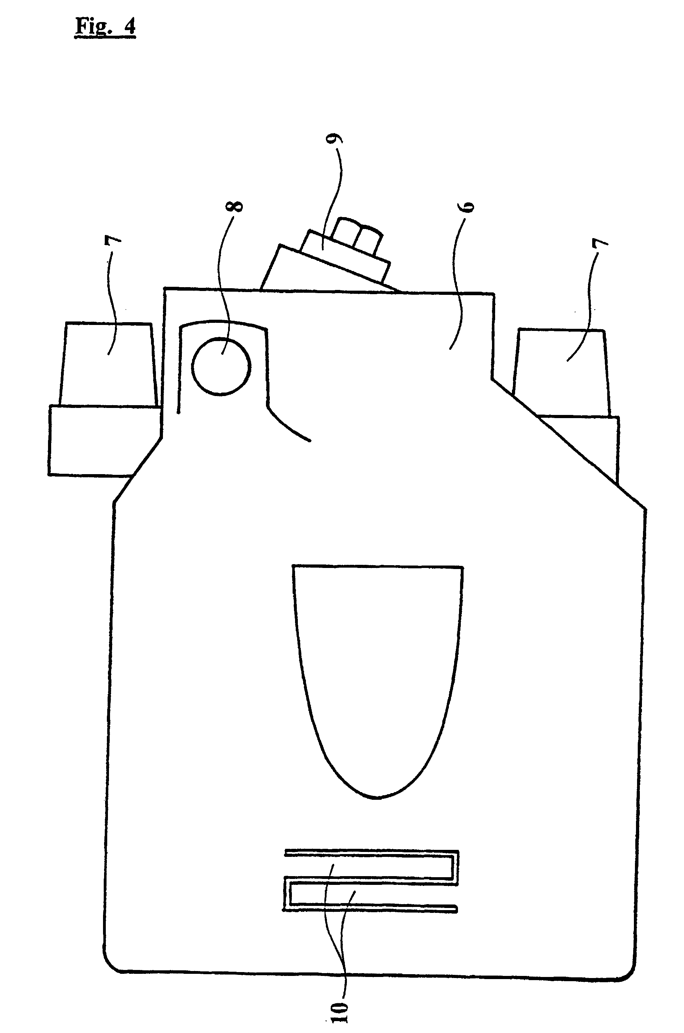

Figur 4 zeigt einen Bremssattel 6 mit Anschlußverschraubungen 7, einer Entlüftung 8 und einem Hydraulikanschluß 9. Ferner sind zwei Resonatoren 10 vorgesehen, die in ihrer Anordnung und Ausbildung den Resonatoren 3 nach Figur 1 entsprechen.

Im Rahmen der Erfindung sind durchaus Abwandlungsmöglichkeiten gegeben. Dies betrifft vor allem die Ausbildung und Anordnung der Resonatoren. Denkbar ist beispielsweise eine sternförmige Anordnung. Zu betonen ist, daß auch Resonatoren unterschiedlicher Frequenzen eingesetzt werden können.

Die Anwendbarkeit der Erfindung beschränkt sich nicht auf Scheibenbremsen. Vor allen Dingen können auch Trommelbremsen mit Resonatoren bestückt werden. Grundsätzlich läßt sich die Erfindung auf sämtliche Reibungsbremsen und -kupplungen anwenden.

## Patentansprüche

1. Reibungsbremse oder -kupplung mit einer Mehrzahl von Bauteilen, deren Flächen derart dimensioniert sind, daß die bei einem Reibvorgang erzeugten Schallwellen hörbar sind, wobei mindestens eines der Bauteile mit mindestens einem Schwingungselement verbunden ist,
**dadurch gekennzeichnet,**
**daß** das Schwingungselement als Resonator (3; 5; 10) ausgebildet ist, dessen erste Eigenfrequenz auf eine reibungsinduzierte Anregungsfrequenz der Bremse bzw. Kupplung eingestellt ist und dessen Fläche derart dimensioniert ist, daß die erzeugten Schallwellen nicht hörbar sind.

2. Reibungsbremse oder -kupplung nach Anspruch 1, **dadurch gekennzeichnet, daß** der Resonator (3;5;10) als einseitig oder beidseitig eingespannter Balken ausgebildet ist.

3. Reibungsbremse oder -kupplung nach Anspruch 1 oder 2, **dadurch gekennzeichnet, daß** der Resonator (3;10) über die volle Wandstärke des Bauteils ausgebildet ist.

4. Reibungsbremse oder -kupplung nach einem der Ansprüche 1 bis 3, **dadurch gekennzeichnet, daß** der Resonator (3;10) aus dem Material des zugehörigen Bauteils besteht.

5. Reibungsbremse oder -kupplung nach Anspruch 4, **dadurch gekennzeichnet, daß** der Resonator (3;10) einteilig mit dem Bauteil verbunden ist.

6. Reibungsbremse oder -kupplung nach einem der Ansprüche 1 bis 5, **dadurch gekennzeichnet, daß** mindestens eines der Bauteile mit mehreren Resonatoren (3;5;10) verbunden ist, die mit ihren ersten Eigenfrequenzen auf unterschiedliche reibungsinduzierte Anregungsfrequenzen der Bremse bzw. Kupplung eingestellt sind.

7. Reibungsbremse oder -kupplung nach einem der Ansprüche 1 bis 6, **dadurch gekennzeichnet, daß** zwei Resonatoren (3;10) mit einem Bauteil verbunden und diagonal zueinander versetzt in einer gemeinsam Ausnehmung angeordnet sind.

8. Reibungsbremse oder -kupplung nach einem des Ansprüche 1 bis 6, **dadurch gekennzeichnet, daß** mehrere Resonatoren mit einem Bauteil in Sternförmiger Ausrichtung winkelversetzt zueinander verbunden sind.

9. Reibungsbremse oder -kupplung nach Anspruch 8, **dadurch gekennzeichnet, daß** vier je um 90 ° gegeneinander versetzte Resonatoren vorgesehen sind.

## Claims

1. Friction brake or friction clutch with a plurality of components, the surfaces of which are so dimensioned that the sound waves generated in a frictional process are audible, at least one of the components being connected to at least one vibratory element, **characterised in that** the vibratory element is constructed in the form of a resonator (3; 5; 10), the first resonant frequency of which is set to a friction-induced excitation frequency of the brake or clutch and whose surface is so dimensioned that the sound waves generated are inaudible.

2. Friction brake or friction clutch as claimed in Claim 1, **characterised in that** the resonator (3; 5; 10) is constructed in the form of a beam fixed on one side or on both sides.

3. Friction brake or friction clutch as claimed in Claim 1 or 2, **characterised in that** the resonator (3; 10) is formed over the entire wall thickness of the component.

4. Friction brake or friction clutch as claimed in one of Claims 1 to 3, **characterised in that** the resonator (3; 10) comprises the material of the associated component.

5. Friction brake or friction clutch as claimed in Claim 4, **characterised in that** the resonator (3; 10) is integrally connected to the component.

6. Friction brake or friction clutch as claimed in one of Claims 1 to 5, **characterised in that** at least one of the components is connected to a plurality of resonators (3; 5; 10), the first resonant frequencies of which are set to different friction-induced excitation frequencies of the brake or clutch.

7. Friction brake or friction clutch as claimed in one of Claims 1 to 6, **characterised in that** two resonators (3; 10) are connected to a component and are arranged diagonally offset from one another in a common recess.

8. Friction brake or friction clutch as claimed in one of Claims 1 to 6, **characterised in that** a plurality of resonators are connected to a component angularly offset from one another in a star-shaped orientation.

9. Friction brake or friction clutch as claimed in Claim 8, **characterised in that** four resonators are provided offset from one another by 90°.

## Revendications

1. Frein ou embrayage à friction comportant un grand nombre d'éléments dont les surfaces sont dimensionnées de façon telle que les ondes acoustiques produites lors d'une friction sont audibles, au moins un des éléments étant lié à au moins un élément de vibration,
**caractérisé par le fait**
**que** l'élément de vibration est un résonateur (3 ; 5 ; 10) dont la première fréquence propre est fixée à une fréquence d'excitation du frein ou de l'embrayage produite par la friction et dont la surface est dimensionnée de façon telle que les ondes acoustiques produites ne soient pas audibles.

2. Frein ou embrayage à friction selon la revendication 1, **caractérisé par le fait que** le résonateur (3 ; 5 ; 15) est une poutre encastrée d'un côté ou des deux côtés.

3. Frein ou embrayage à friction selon l'une des revendications 1 et 2, **caractérisé par le fait que** le résonateur (3 ; 10) est réalisé sur toute l'épaisseur de paroi de l'élément.

4. Frein ou embrayage à friction selon l'une des revendications 1 à 3, **caractérisé par le fait que** le résonateur (3 ; 10) est constitué de la matière de l'élément associé.

5. Frein ou embrayage à friction selon la revendication 4, **caractérisé par le fait que** le résonateur (3 ; 10) fait corps avec l'élément.

6. Frein ou embrayage à friction selon l'une des revendications 1 à 5, **caractérisé par le fait qu'**au moins un des éléments est lié à plusieurs résonateurs (3 ; 5 ; 10) dont les premières fréquences propres sont fixées à des fréquences d'excitation du frein ou de l'embrayage différentes produites par la friction.

7. Frein ou embrayage à friction selon l'une des revendications 1 à 6, **caractérisé par le fait que** deux résonateurs (3 ; 10) sont liés à un élément et placés décalés en diagonale dans un évidement commun.

8. Frein ou embrayage à friction selon l'une des revendications 1 à 6, **caractérisé par le fait que** plusieurs résonateurs sont liés à un élément décalés angulairement en étoile.

9. Frein ou embrayage à friction selon la revendication 8, **caractérisé par le fait qu'**il est prévu quatre résonateurs décalés de 90° les uns des autres.
